# EUROPÄISCHE PATENTSCHRIFT

(11) **EP 2 758 606 B1**
(45) Veröffentlichungstag und Bekanntmachung des Hinweises auf die Patenterteilung: **31.08.2016**
(21) Anmeldenummer: 12775641.9
(22) Anmeldetag: 21.09.2012
(51) Int. Cl.: E03B 7/07, E03C 1/00, G05D 7/06

(54) **GEBÄUDEWASSERSICHERHEITSEINRICHTUNG**
BUILDING WATER SAFETY DEVICE
DISPOSITIF DE SÉCURITÉ HYDRAULIQUE POUR IMMEUBLES

(30) Priorität: 21.09.2011 DE 202011105910 U
(43) Veröffentlichungstag der Anmeldung: 30.07.2014
(73) Patentinhaber: Pipe Systems GmbH, 27356 Rotenburg (DE)
(72) Erfinder: KLEE, Axel, 27356 Rotenburg (DE); KLEE, Klaus, 27356 Rotenburg (DE); KLEE, Ingmar, 27356 Rotenburg (DE)
(74) Vertreter: Eisenführ Speiser
(86) Internationale Anmeldenummer: PCT/EP2012/068692
(87) Internationale Veröffentlichungsnummer: WO 2013/041699

(56) Entgegenhaltungen:
- WO-A2-2008/020407
- DE-A1- 19 600 867
- DE-B3-102009 045 150

## Beschreibung

Die Erfindung betrifft eine Gebäudewassersicherheitseinrichtung gemäß des Oberbegriffs des Anspruchs 1 und ein Verfahren gemäß des Oberbegriffs des Anspruchs 12.

Aus DE-B-102009045150 ist eine Wasserversorgungseinrichtung mit integrierter Leckerkennung und ein Steuerverfahren für eine solche Wasserversorgungseinrichtung bekannt. Diese vorbekannte Wasserversorgungseinrichtung umfasst eine Hauptzuleitung mit einem elektrisch ansteuerbaren zentralen Absperrventil, stromaufwärts des zentralen Absperrventils angeschlossene betätigbare Verbraucher und Sensoren, welche die Betätigung eines Verbrauchers oder die Anwesenheit einer Person erfassen. In einer mit den Sensoren verbundenen Steuereinheit ist für jeden Verbraucher eine Ventilöffnungszeit des zentralen Absperrventils gespeichert. Die Steuereinheit erfasst das bei einer Verbraucherbetätigung und/oder bei Anwesenheit einer Person ausgelöste Sensorsignal und öffnet das zentrale Absperrventil nur für die diesem Verbraucher zugeordnete Ventilöffnungszeit.

Gebäudewassersicherheitseinrichtung dienen dazu, um Wasserschäden in Gebäuden zu verhindern. Hierzu sind verschiedene Technologien vorbekannt. So ist es beispielsweise bekannt, mittels Feuchtigkeitssensoren, die im Bodenbereich oder in Senken verlegt sind, einen unerwünschten Wasseraustritt zu erfassen und bei einem solchen Ereignis einen Alarm zu geben. Es ist weiterhin bekannt, durchflussbegrenzende Sperrventile in Gebäudewasserleitungen unmittelbar vor Verbrauchern einzusetzen, um den Austritt von Wasser aus einer Leckage innerhalb des Gebäudes mit einem größeren Volumenstrom zu verhindern.

Mit den vorbekannten Maßnahmen ist es zwar grundsätzlich möglich, größeren Schaden in Folge von Wasserleckagen innerhalb eines Gebäudes zu verhindern, allerdings kann dies nicht mit ausreichender Zuverlässigkeit gewährleistet werden und oftmals werden Schäden bis zu einer bestimmten Größe in Kauf genommen.

Der Erfindung liegt die Aufgabe zugrunde, eine Sicherheitseinrichtung gegen Wasserschäden in Gebäuden bereitzustellen, welche mit einer höheren Zuverlässigkeit das Auftreten von Schäden in Folge von Leckagen an Gebäudewasserleitungen verhindern kann.

Diese Aufgabe wird erfindungsgemäß durch eine Gebäudewassersicherheitseinrichtung gemäß Anspruch 1 und ein Verfahren gemäß Anspruch 12 gelöst. Bevorzugte Ausführunsgformen sind in den abhängigen Ansprüchen 2-11 und 13-17 angegeben.

Mit der erfindungsgemäßen Vorrichtung wird eine besondere Arbeits- und Funktionsweise in Gebäudewassereinrichtungen vorgeschlagen. Erfindungsgemäß ist dabei ein Absperrventil vorgesehen, welches insbesondere in der zentralen Wasserzuleitung des Gebäudes angeordnet sein kann, um den Wasserzufluss zum gesamten Gebäude zu sperren oder zu öffnen. Dieses Absperrventil kann insbesondere hinter der Wasseruhr der Zentralwasserleitung platziert sein. Mit der erfindungsgemäßen Vorrichtung wird es ermöglicht, dieses Absperrventil prinzipiell und die meiste Zeit geschlossen zu halten, wodurch selbst bei Auftreten eines Lecks oder einer sonstigen Undichtigkeit in dem stromabwärts des Absperrventils gelegenen Gebäudewasserleitungsnetz kein Wasser austreten kann.

Die erfindungsgemäße Vorrichtung sieht weiterhin eine Sensorvorrichtung vor, welche erfassen kann, ob sich Personen im Bereich einer Wasserentnahmestelle des Gebäudes befinden. Unter einer Wasserentnahmestelle ist dabei jeglicher Ort zu verstehen, an dem Wasser aus dem Gebäudewasserleitungsnetz verbraucht werden kann, also beispielsweise ein Wasserhahn, ein WC, eine Dusche oder Badewanne, ein wasserverbrauchendes Gerät wie eine Spül- oder Waschmaschine und dergleichen. Unter dem Bereich einer Wasserentnahmestelle ist hierbei ein kleinerer oder größerer räumlicher Bereich zu verstehen, der den Zutritt zu einer Wasserentnahmestelle durch eine Person betrifft. Dies kann der unmittelbare Umgebungsbereich der Wasserentnahmestelle selbst sein, so dass das Sensorsignal nur dann ausgelöst wird, wenn eine Person unmittelbar vor den Wasserhahn, in die Dusche oder dergleichen tritt. Dies kann aber auch ein größerer räumlicher Bereich sein, beispielsweise der gesamte Raum wie das Badezimmer, die Küche oder dergleichen, in dem sich die Wasserentnahmestelle befindet. Ebenso kann dieser Bereich auch lediglich ein Zutrittsbereich sein, der die Wasserentnahmestelle selbst gar nicht umfasst, der aber von einer Person durchschritten werden muss, wenn sie zu der Wasserentnahmestelle gelangen möchte.

Erfindungsgemäß wird dann, wenn sich eine Person in diesem Bereich befindet, mittels der Sensoreinrichtung dies an die Steuerungseinrichtung signalisiert und dann von der Steuerungseinrichtung ein Signal an den Aktuator des Absperrventils gesendet, das ein Öffnen des Absperrventils bewirkt. Durch diese funktionelle Gestaltung wird eine gezielte Öffnung der zentralen Wasserzuleitung des Gebäudes immer dann bewirkt, wenn eine Wasserentnahme möglicherweise kurz bevorsteht. Während aller übrigen Zeiträume kann hingegen das Absperrventil gesperrt bleiben, so dass ein unerwünschter Wasseraustritt verhindert wird. Diese Funktion ist einerseits wirksam, um Wasserschäden durch Leckagen zu verhindern, da stets nur für kurze Zeiträume überhaupt Leitungsdruck auf das gesamte Gebäudewasserleitungsnetz aufgegeben wird und folglich nur in solch kurzen Zeiträumen überhaupt ein Wasseraustritt durch ein Leck auftreten kann. Zudem ist diese Funktion wirksam gegen einen dauerhaften, versehentlichen Wasseraustritt aus einer Wasserentnahmestelle, beispielsweise wenn vergessen wird, einen Wasserhahn vollständig zu schließen. In diesem Fall wird dann, wenn die Person den Bereich um die Wasserentnahmestelle wieder verlässt, durch eine weitere näher auszuführende Funktion ein Schließen des Absperrventils wieder bewirkt, wodurch ein Tropfen des Wasserhahns aufgrund unvollständigen Schließens desselben unterbunden wird.

Die erfindungsgemäße Einrichtung bewirkt somit eine effiziente Reduktion des Risikos von Wasserschäden im Gebäude und des übermäßen Wasserverbrauchs durch unvollständiges Verschließen von Wasserentnahmestellen.

In einer alternativen oder zusätzlichen Ausgestaltung wird das Absperrventil dann angesteuert, um in die Schließstellung zu gehen, wenn keine Person im Bereich einer Wasserentnahmestelle festgestellt wird. Diese Funktionsweise bewirkt eine sofortige Schließung des Absperrventils in der Zentralwasserleitung, sobald eine Wasserentnahme nicht mehr zu erwarten ist. Die Funktion kann einerseits mit der zuvor erläuterten Öffnung des Absperrventils bei Eintreten einer Person in den Bereich einer Wasserentnahmestelle kombiniert werden, um auf diese Weise sowohl den Öffnung- als auch den Schließvorgang in Abhängigkeit des Sensorsignals zu steuern. Wird alleinig die Schließfunktion in Abhängigkeit des Sensorsignals gesteuert, so kann dies mit einer laufenden Öffnungsfunktion kombiniert werden, die nur dann widerrufen bzw. gegengesteuert wird, wenn die Abwesenheit einer Person erfasst wird.

Gemäß einer ersten bevorzugten Ausführungsform ist vorgesehen, dass die Steuerungseinrichtung ausgebildet ist, um nach Ablauf einer vorbestimmten Zeitspanne nach dem Empfang eines Sensorsignals von der Sensoreinrichtung, welches die Anwesenheit einer Person im Bereich der Wasserentnahmestelle signalisiert, den Aktuator zur Bewegung des Absperrorgans in die Schließstellung anzusteuern. Gemäß dieser Ausführungsform wird eine zwangsläufige Schließung des Absperrventils nach Ablauf einer vorbestimmten Zeit vorgenommen, um hierdurch sicherzustellen, dass das Absperrventil niemals über einen längeren Zeitraum geöffnet bleibt. Dabei kann die vorbestimmte Zeitspanne ab dem Zeitpunkt der erstmaligen Detektion einer Person im Bereich der Wasserentnahmestelle gestartet werden oder die Anwesenheit einer Person im Bereich der Wasserentnahmestelle kann als laufendes Ereignis verarbeitet werden und die Zeitspanne ab dem Zeitpunkt starten, zu dem die Person den Bereich verlässt.

Noch weiter ist bevorzugt vorgesehen, dass die Sensoreinrichtung ausgebildet ist, um eine Bewegung im Bereich der Wasserentnahmestelle zu erfassen und bei Erfassung einer solchen Bewegung die Anwesenheit einer Person im Bereich der Wasserentnahmestelle an die Steuerungseinrichtung zu signalisieren. Diese Ausführungsform zeichnet sich dadurch aus, dass eine Bewegung erfasst wird und kann daher insbesondere in der Sensorausgestaltung eine differenzierte Betrachtungsweise für die Anwesenheit bzw. das Eintreten einer Person in den Bereich der Wasserentnahmestelle ermöglichen. So können insbesondere Bewegungssensoren bekannter Bauart für diese Ausführungsform verwendet werden. Weiterhin ist zu verstehen, dass diese Ausführungsform kombiniert werden kann mit Sensoreinrichtungen, welche die Anwesenheit einer Person im Bereich der Wasserentnahmestelle detektieren, so dass sowohl eine Bewegung als auch eine statische Anwesenheit zur Öffnung des Absperrventils als Eingangsgröße für die Steuerungseinrichtung genutzt werden.

Noch weiter ist es bevorzugt, dass die Sensoreinrichtung aktiv durch Aussenden und Empfangen von elektromagnetischen Wellen, aktiv durch Aussenden und Empfangen von Ultraschallwellen, oder passiv durch Empfangen einer Infrarotstrahlung oder einer Kombination aus von zwei der oder allen drei vorgenannten Funktionsweisen arbeitet. Mit diesen Sensormessmethoden kann einerseits nach dem Dopplereffekt, andererseits anhand der von einer Person ausgehenden Wärmestrahlung eine aktive bzw. passive Überwachung eines Bereichs wirksam erfolgen. Um hierbei insbesondere sicherzustellen, dass nur durch in den Bereich hineintretende Personen eine Sensorsignalauslösung erfolgt, können insbesondere Kombinationen verschiedener Messmethoden eingesetzt werden, um hierdurch beispielsweise durch einen Windzug erzeugte Bewegungen von Einrichtungsgegenständen nicht zu einer versehentlichen Auslösung des Sensors zu veranlassen.

Noch weiter ist es bevorzugt, dass die Sensoreinrichtung und oder die Aktuatoreinheit mit der Steuerungseinrichtung drahtlos kommuniziert. Eine solche drahtlose Kommunikation erleichert in erheblicher Weise die Installation der erfindungsgemäßen Sicherheitseinrichtung. Dabei ist zu verstehen, dass insbesondere auch mehrere Sensoreinrichtungen installiert werden können, und zwar solcher Art, dass zwei oder mehr Sensoreinrichtungen für eine Wasserentnahmestelle platziert werden, um unterschiedliche Zutrittswege zu überwachen, ebenso aber auch mehrere unterschiedliche Wasserentnahmestellen durch entsprechend mehrere Sensoreinrichtungen überwacht werden können und ebenso gut mehrere Wasserentnahmestellen durch eine einzige Sensoreinrichtung gemeinsam überwacht werden können. Grundsätzlich ist zu verstehen, dass diese mehreren Sensoreinrichtungen mit einer einzigen oder mehreren Steuerungseinrichtungen kommunizieren können. In gleicher Weise ist zu verstehen, dass ein einziges Absperrventil in der Zentralwasserleitung eines Gebäudes vorgesehen sein kann, ebenso aber auch mehrere Absperrventile in dezentralen Leitungen des Gebäudewasserleitungsnetzes angeordnet und angesteuert werden können. Zur drahtlosen Kommunikation eignen sich insbesondere Drahtlosnetzwerke, die im Gebäude auch für andere Kommunikationszwecke installiert sind, beispielsweise WLAN-Netzwerke.

Noch weiter ist es bevorzugt, dass die Sensoreinrichtung und/oder die Aktuatoreinheit einen Energiespeicher aufweist, vorzugsweise einen wiederaufladbaren oder austauschbaren Energiespeicher. Grundsätzlich können sowohl die Sensoreinrichtung als auch die Aktuatoreinheit an das Hausleitungsstromnetz angeschlossen werden, um den laufenden Betrieb und eine entsprechende Energieversorgung sicherzustellen. Zur einfachen Installation ist es aber insbesondere für die Sensoreinrichtung bevorzugt, wenn diese einen Energiespeicher aufweisen, beispielsweise eine austauschbare Batterie, um somit eine einfache und variable Installation und Platzierung zu ermöglichen. Dabei ist zu verstehen, dass diese Ausführungsform mit Energiespeicher insbesondere dann vorteilhaft ist, wenn eine drahtlose Kommunikation zugleich vorgesehen wird, so dass dann die Sensoreinrichtung vollkommen frei von Leitungs- und Energieversorgungskabeln platziert und installiert werden kann.

Noch weiter ist es bevorzugt, dass das Absperrventil in die Zentralwasserzuleitung eines Gebäudes eingebaut ist und jeweils eine Sensoreinrichtung in jedem Bereich einer oder mehrerer Wasserentnahmestelle(n) des Gebäudes bereitgestellt ist. Mit einer solchen Ausgestaltung wird einerseits durch Sperren der Zentralwasserzuleitung des Gebäudes unerwünschter Wasseraustritt durch Leckagen oder nicht vollständig geschlossene Wasserentnahmestellen zuverlässig verhindert, andererseits an jeder Wasserentnahmestelle des Gebäudes eine Wasserentnahme durch eine Person bzw. ein wasserverbrauchendes Gerät ermöglicht, indem der Bereich dieser Wasserentnahmestelle mittels der Sensoreinrichtung überwacht wird.

Noch weiter ist es bevorzugt, dass die Steuerungseinrichtung Teil einer Gebäudesteuerung ist und vorzugsweise über ein Drahtlosnetzwerk innerhalb des Gebäudes mit der/den Sensoreinrichtungen und/oder dem Aktuator kommuniziert. Mit dieser spezifischen Ausgestaltung kann ein bereits vorhandenes Netzwerk dazu genutzt werden, um die Sicherheitseinrichtung zu steuern und um gegebenenfalls erfolgende Schaltvorgänge nach Zeit, Auslösungsort, Dauer und gegebenenfalls weiteren Parametern abzuspeichern. Dabei kann beispielsweise ein hausinternes WLAN-Netzwerk genutzt werden. Ebenso könnte eine installierte Haussteuerungseinheit, welche bereits andere Funktionen wie Heizungssteuerung, Lüftungssteuerung, Rolladensteuerung, Lichtsteuerung oder dergleichen übernimmt, als Steuerungseinrichtung ausgeführt werden. Ebenso ist es alternativ möglich, die Steuerungsfunktion der erfindungsgemäßen Steuerungseinrichtung mittels eines im hausinternen drahtlos Netzwerk installierten Computers mit entsprechender Software ausführen zu lassen.

Gemäß der Erfindung hat die Sicherheitseinrichtung eine Schalteinrichtung welche signaltechnisch mit der Steuerungseinrichtung gekoppelt und ausgebildet ist, um eine Einschaltbetätigung eines wasserverbrauchenden Gerätes zu erfassen und ein Signal an die Steuerungseinrichtung zur Öffnung des Absperrventils zu senden. Unter einem wasserverbrauchenden Gerät kann hierbei insbesondere eine Spül- oder Waschmaschine verstanden werden, die sich dadurch auszeichnet, dass sie nach dem in-Gang-Setzen durch eine Person über einen vorbestimmten, je nach Programmart kürzeren oder längeren Zeitraum laufen und hierbei laufend oder in Zeitabständen Wasser verbrauchen. Um die Funktion eines solchen wasserverbrauchenden Gerätes in Verbindung mit der Erfindung zu gewährleisten, ist es in diesem Fall nicht ausreichend, lediglich für den Zeitraum der Anwesenheit einer Person im Bereich dieses Gerätes das Absperrventil zu öffnen. Vielmehr muss sicher gestellt sein, dass das Absperrventil während der gesamten Laufzeit des wasserverbrauchenden Gerätes geöffnet ist. Dies kann entweder durch eine fixe Zeitsteuerung erfolgen, in dem entweder ein nach Einschalten des Geräts oder nach Erfassen einer Person im Bereich des Geräts durch die Sensoreinrichtung das Absperrventil für einen vorbestimmten Zeitraum geöffnet bleibt, der die maximale Laufzeit des Geräts übersteigt oder dieser genau entspricht. In weiter fortgeschrittenen Ausführungsformen kann das Absperrventil für genau die Zeitdauer der Laufzeit des Geräts geöffnet bleiben. In diesem Fall ist eine intelligente Kommunikation zwischen der erfindungsgemäßen Steuerungseinrichtung und dem wasserverbrauchenden Gerät erforderlich, um die Programmlaufzeit zu kommunizieren oder den Stromverbrauch des Geräts und entsprechend zu verarbeiten. Zu diesem Zweck kann das wasserverbrauchende Gerät oder dessen Stromversorgung mittels einer entsprechenden Schnittstelle mit der Steuerungseinrichtung der erfindungsgemäßen Sicherheitseinrichtung kommunizieren, insbesondere können hierfür entsprechende Schnittstellenmodule bereits gestellt sein, die an das wasserverbrauchende Gerät angeschlossen werden.

Gemäß der Erfindung umfasst die Schalteinrichtung einen Sensor umfasst, der ausgebildet ist, um den Schaltzustand oder einen Schaltvorgang eines elektromagnetischen Peripherieabsperrventils zu erfassen, insbesondere indem der Sensor eine elektrische Spule oder einen elektronischen Magnetfeldsensor umfasst, die / der ausgebildet ist, um ein Magnetfeld des Elektromagneten des Peripherieabsperrventils zu detektieren, oder ein Mikrofon umfasst, um ein Schaltgeräusch oder ein Durchflussgeräusch des Peripherieabsperrventils zu detektieren, und dass die Einschaltbetätigung anhand eines Öffnungsvorgangs des Peripherieabsperrventils erfasst wird. Mit dieser Fortbildung wird es möglich, den Zeitpunkt, zu dem ein wasserverbrauchendes Gerät Wasser anfordert, sehr genau zu bestimmen, oder auch umgekehrt den Zeitpunkt, zu dem ein wasserverbrauchendes Gerät kein Wasser mehr benötigt, genau zu bestimmen und das Absperrventil entsprechend anzusteuern. Hierzu wird die erfindungsgemäße Vorrichtung mit einem Sensor ausgerüstet, der an ein oftmals als Aquastop bezeichnetes Peripherieabsperrventil angesetzt werden kann, beispielsweise verklebt, mittels eines Gurtes oder dergleichen. Dieser Sensor erfasst einen Schaltvorgang oder einen Schaltzustand dieses Peripherieabsperrventils und kann daher ermitteln, ob.das an dieses Peripherieabsperrventil angeschlossenen wasserverbrauchendes Gerät Wasser benötigt oder nicht. Das Sensorsignal wird drahtlos oder drahtgebunden, beispielsweise über ein Kabel mit Hilfe einer Signalspannung oder ein Kabel mit Konstantstromquelle, als Zustand von Schaltkontakten zum Steuern anderer Geräte, als Infrarotsignal, als elektromagnetisches Funksignal, als Ultraschallsignal oder als akustisches Signal übermittelt. Weiter bevorzugt ist es dabei, einen Verstärker, Tiefpassfilter und/oder Gleichrichter für das Sensorsignal bereitzustellen, um das Signal entsprechend zu verstärken, tiefpasszufiltern und gleichzurichten und auf diese Weise ein eindeutiges, fehlerfreies Signal zu erhalten.

Gemäß einer noch weiteren bevorzugten Ausführungsform ist vorgesehen, die erfindungsgemäße Sicherheitseinrichtung fortzubildenden durch eine Durchflussmesseinrichtung oder eine Druckmesseinrichtung zum Erfassen eines Durchflusses bzw. Druckes in einer Zentralwasserleitung, und dadurch gekennzeichnet, dass die Steuerungseinrichtung ausgebildet ist, um zu einem vorbestimmten Zeitpunkt oder innerhalb eines vorbestimmten Zeitraumes, wenn keine Person im Bereich einer Wasserentnahmestelle erfasst ist und ggfs. kein wasserverbrauchendes Gerät aktiviert ist, eine Wasserleitungsnetzprüfung auszuführen, umfassend die Schritte: Öffnen des Absperrventilsmittels des Aktuators, und Erfassen des Durchflusses mittels der Durchflussmesseinrichtung oder Erfassen des Druckverlaufs bei geschlossenem Absperrventil über einen vorbestimmten Zeitraum mittels der Druckmesseinrichtung, Anzeigen einer Wasserleckage falls ein Durchfluss oder ein Druckabfall erfasst wird, und ggfs. Schließen des Absperrventils mittels des Aktuators.

Mit dieser Fortbildung wird eine regelmäßige oder auf Veranlassung eines Benutzers initiierte Überprüfung der Wasserdichtigkeit des gesamten Gebäudewasserleitungsnetzes ermöglicht. Grundsätzliche Voraussetzung hierfür ist, dass diese Prüfung zu einem Zeitpunkt durchgeführt wird, zu dem an keiner Wasserentnahmestelle des Gebäudes Wasser entnommen wird. Sofern eine Überprüfung zu einer regelmäßigen Programmzeit erfolgt, kann zu diesem Zweck vorzugsweise eine Überprüfungszeit während der Nachtstunden, beispielsweise zwischen zwei und vier Uhr erfolgen, da erfahrungsgemäß in Gebäuden innerhalb dieses Zeitraums die höchste Wahrscheinlichkeit besteht, dass keine Wasserentnahmestelle benutzt wird.

Erfindungsgemäß wird dann entweder bei geöffnetem Absperrventil mittels einer Durchflussmesseinrichtung erfasst, ob ein Durchfluss durch das Absperrventil erfolgt. Das Feststellen eines solchen Durchflusses wäre ein klares Indiz für das Bestehen einer Leckage oder einer unvollständig geschlossenen Wasserentnahmestelle innerhalb des Gebäudes. Die erfindungsgemäße Sicherheitseinrichtung könnte in diesem Fall ein entsprechendes akustisches oder optisches Signal ausgeben, um auf diese Feststellung hinzuweisen und würde weiterhin, wie ohnehin regulär vorgesehen, das Absperrventil nach erfolgter Prüfung wieder schließen, um weiteren Wasseraustritt in unerwünschter Weise zu verhindern. Alternativ oder zusätzlich hierzu kann auch im Bereich hinter dem Absperrventil eine Druckmesseinrichtung installiert werden, welche den Druck hinter dem Absperrventil erfasst. In diesem Fall kann aus einer Betriebsstellung heraus, in der das Absperrventil geöffnet, alle Wasserentnahmestellen des Gebäudes aber geschlossen sind oder zumindest eine erhebliche Drosselwirkung ausüben, das Absperrventil geschlossen werden und der Verlauf des Wasserdrucks in der Wasserleitung hinter dem Absperrventil mittels der Druckmesseinrichtung über einen vorbestimmten Zeitraum erfasst werden. Wird hierbei durch die erfindungsgemäße Steuerungseinrichtung festgestellt, dass dieser Druck konstant bleibt oder nur mit einer geringen, vorbestimmten Rate abfällt, zeigt dies ein in soweit dichtes Wasserleitungsnetzwerk innerhalb des Gebäudes an. Ein von der Steuerungseinrichtung beobachteter Druckabfall oder deutlichen Druckabfälle hingegen zeigt den Austritt von Wasser aus dem Wasserleitungsnetzwerk hinter dem Absperrventil an und würde somit ebenfalls durch akustische oder optische Anzeigen signalisiert werden können. Der Vorteil dieser letzten Ausführungsform besteht darin, dass zur Überprüfung der Dichtigkeit des Wasserleitungsnetzwerkes das Absperrventil nicht geöffnet werden muss und folglich etwaig bestehende Leckagen nicht während der Überprüfung mit Wasser beaufschlagt werden.

Ein weiterer Aspekt der Erfindung ist ein Verfahren zur Verhinderung von Wasserschäden in Gebäuden nach Anspruch 12.

Das Verfahren kann fortgebildet werden durch die Schritte Erfassen einer Einschaltbetätigung an einem wasserverbrauchenden Gerät, Ansteuern des Aktuators des Absperrventils zum Öffnen des Absperrventils, wenn eine Einschaltbetätigung erfasst wird.

Weiter kann das Verfahren mit den Schritten fortgebildet werden: Drahtloses Übermitteln eines Signals von der Sensoreinrichtung und/oder dem wasserverbrauchenden Gerät zu einer Steuerungseinrichtung, und/oder Drahtloses Übermitteln eines Signals von der Steuerungseinrichtung zu dem Aktuator des Absperrventils.

Schließlich kann das Verfahren weiter fortgebildet werden mit den Schritten, dass zu einer vorbestimmten Überprüfungszeit in regelmäßigen Zeitintervallen oder bei Betätigen einer Überprüfungsschalters eine Leckageprüfung durchgeführt wird. Dies kann beispielsweise durch die Schritte erfolgen: Öffnen des Absperrventils mittels des Aktuators, und Erfassen des Durchflusses mittels einer Durchflussmesseinrichtung oder dies kann mit dem Schritt erfolgen: Erfassen eines Druckverlaufs über einen vorbestimmten Zeitraum mittels einer Druckmesseinrichtung bei geschlossenem Absperrventil in Strömungsrichtung hinter dem Absperrventil. Falls ein Durchfluss oder ein Druckabfall festgestellt wird, so wird in beiden Fällen eine Wasserleckage optisch oder akustisch angezeigt, bei der ersten Messmethode ist weiterhin das Absperrventils zu schließen, um weiteren Wasseraustritt zu verhindern.

Eine bevorzugte Ausführungsform der Erfindung wird anhand der beiliegenden Figuren beschrieben, welche einen schematischen Grundriss eines Gebäudes zeigt, das mit der erfindungsgemäßen Sicherheitseinrichtung ausgerüstet ist.

In den dargestellten Grundriss ist ein Gebäude 1 gezeigt, welches einen Hauswirtschaftsraum 10 umfasst, welcher einen Anschluss an das öffentliche Wasserleitungsnetzwerk aufweist. Dieser Anschluss mündet zunächst in einer Wasseruhr 11, in Strömungsrichtung hinter dieser Wasseruhr 11 ist ein Sicherheitsventil 12 angeordnet.

Ebenfalls ist in dem Hauswirtschaftsraum eine Steuerungselektronikeinheit 13 angeordnet, die drahtlos mit mehreren, nachfolgend erläuterten Bewegungsmeldern kommuniziert. Die Steuerungseinheit 13 ist Drahtgebunden mit einem Aktuator 12a gekoppelt, der das Sicherheitsventil aus einer geöffneten in eine geschlossene Stellung und umgekehrt betätigen kann.

Das Gebäude umfasst weiterhin ein Bad 20, ein Kinderzimmer 30, ein Gäste WC 40, einen Schlafraum 50, einen Wohnraum 60 und eine Küche 70. Im jeweiligen Bereich der von einem Flur ausgehenden Eingangstüren in das Bad 20, das Gäste WC 40 und die Küche 70 ist jeweils ein Bewegungsmelder 21, 41, 71 angeordnet. Dieser Bewegungsmelder erfasst das Eintreten einer Person in den jeweiligen Raum und die Anwesenheit einer Person in dem jeweiligen Raum.

Jeder Bewegungsmelder 21, 41, 71 kommuniziert drahtlos mit der Steuerungselektronikeinheit 13 im Hauswirtschaftsraum und meldet das Betreten bzw. die Anwesenheit einer Person in dem jeweils überwachten Raum. Wird eine solche Meldung von der Steuerungselektronikeinheit 13 empfangen, so betätigt diese den Aktuator 12a, um das Sicherheitsventil 12 zu öffnen.

Dabei ist die Steuerungselektronikeinheit solcher Art programmiert, dass sie Empfang eines Anwesenheitssignals von den Bewegungsmeldern 21 und 41 das Sicherheitsventil solange geöffnet hält, wie sich die Person in dem jeweiligen Raum aufhält und das Sicherheitsventil umgehend schließt, sobald der Bewegungsmelder keiner Anwesenheit einer Person im Bad 20 bzw. Gäste WC 40 mehr meldet.

Wird die Anwesenheit einer Person in der Küche 70 durch den Bewegungsmelder 71 gemeldet, so fragt die Steuerungseinheit weiterhin drahtlos kommunizierende Elektronikmodule 72, 73 ab, welche die Betätigung einer Spülmaschine und einer Waschmaschine signalisieren. Wird durch diese Elektronikmodule 72, 73 an die Steuerungselektronikeinheit der Lauf einer oder beider Geräte gemeldet, so hält die Steuerungselektronikeinheit das Sicherheitsventil für die Dauer dieses. Laufs offen und schließt es erst, nachdem das Gerät seinen Spül- bzw. Waschvorgang beendet hat.

Zur direkten Abfrage der Elektronikmodule 72, 73 wird ein Aquastopventil, welches in die Wasserzuleitung zu der Spül- oder Waschmaschine eingesetzt ist, mittels eines Sensors abgetastet. Der Sensor umfasst einen Magentfeldsensor, der eine Betätigung des Elektromagneten des Aquastopventils detektiert und als Signal mittels einer Funkübertragung an die Steuerungseinheit übermittelt. Das Signal wird verstärkt, tiefpassgefiltert und zu einem Steuersignal gleichgerichtet, um daraus eine Ansteuerung des Absperrventils zu erreichen.

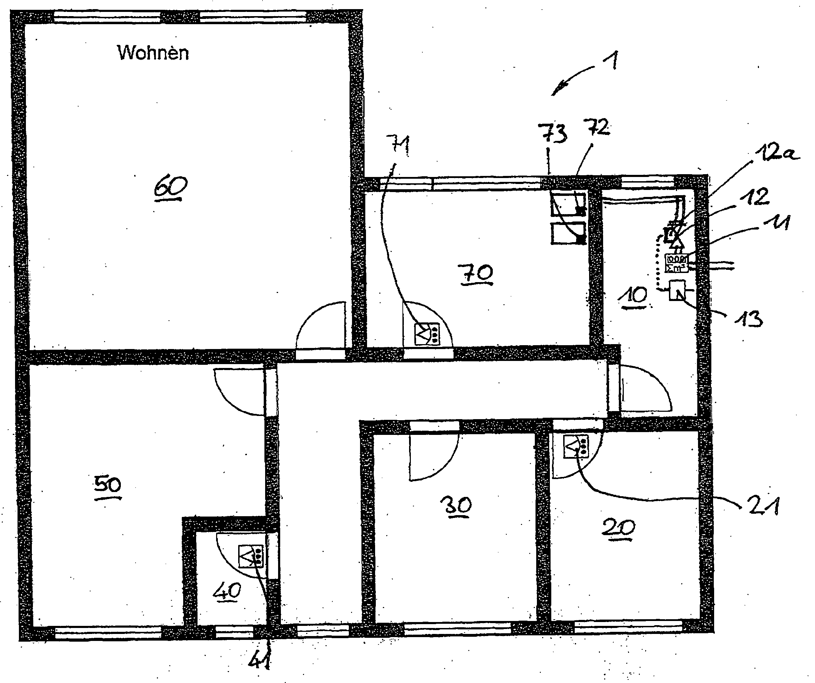

## Patentansprüche

1. Gebäudewassersicherheitseinrichtung, umfassend
- ein Absperrventil (12) mit einer Einlass- und einer Auslassöffnung, einem Ventilkanal, der die Einlassöffnung mit der Auslassöffnung verbindet und einem Absperrorgan, welches den Ventilkanal in einer Offenstellung für den Durchtritt eines Mediums von der Einlass- zu der Auslassöffnung freigibt und in einer Schließstellung sperrt,
- einen Aktuator (12a), insbesondere einen elektromechanisch betätigten Aktuator, der mechanisch mit dem Absperrorgan gekoppelt und ausgebildet ist zur Bewegung des Absperrorgans aus der Offen- in die Geschlossenstellung und umgekehrt,
- eine Sensoreinrichtung zur Erfassung der Anwesenheit einer Person im Bereich einer Wasserentnahmestelle,
- eine mit der Sensoreinrichtung und dem Aktuator signaltechnisch gekoppelte Steuerungseinrichtung (13), welche ausgebildet ist, um
o bei Empfang eines Sensorsignals von der Sensoreinrichtung, welches die Anwesenheit einer Person im Bereich der Wasserentnahmestelle signalisiert, den Aktuator zur Bewegung des Absperrorgans in die Offenstellung anzusteuern und/oder
o bei Empfang eines Sensorsignals von der Sensoreinrichtung, welches die Abwesenheit einer Person im Bereich der Wasserentnahmestelle signalisiert, den Aktuator zur Bewegung des Absperrorgans in die Schließstellung anzusteuern,
- eine Schatteinricntung (72, 73) welche signaltechnisch mit der Steuerungseinrichtung (13) gekoppelt und ausgebildet ist, um eine Einschalttietätigung eines wasserverbrauchenden Gerätes zu erfassen und ein Signal an die Steuerungseinrichtung zur Öffnung des Absperrventils zu senden,
**dadurch gekennzeichnet dass** die Schalteinrichtung einen Sensor umfasst, der ausgebildet ist, um den Schaltzustand oder einen Schaltvorgang eines elektromagnetischen Peripherieabsperrventils an den das wasserverbrauchende Gerät angeschlossen ist, zu erfassen,
und dass die Einschaltbetätigung anhand eines Öffnungsvorgangs des Peripherieabsperrventils erfasst wird.

2. Gebäudewassersicherheitseinrichtung nach Anspruch 1,
**dadurch gekennzeichnet, dass** der Schaltzustand oder Schaltvorgang erfasst indem der Sensor
- eine elektrische Spule oder einen elektronischen Magnetfeldsensor umfasst, die / der ausgebildet ist, um ein Magnetfeld des Elektromagneten des Peripherieabsperrventils zu detektieren, oder
- ein Mikrofon umfasst, um ein Schaltgeräusch oder ein Durchflussgeräusch des Peripherieabsperrventils zu detektieren.

3. Gebäudewassersicherheitseinrichtung nach Anspruch 1 oder 2,
**dadurch gekennzeichnet, dass** die Steuerungseinrichtung ausgebildet ist, um nach Ablauf einer vorbestimmten Zeitspanne nach dem Empfang eines Sensorsignals von der Sensoreinrichtung, welches die Anwesenheit einer Person im Bereich der Wasserentnahmestelle signalisiert, den Aktuator zur Bewegung des Absperrorgans in die Schließstellung anzusteuern.

4. Gebäudewassersicherheitseinrichtung nach einem der vorhergehenden Ansprüche,
**dadurch gekennzeichnet, dass** die Sensoreinrichtung ausgebildet ist, um eine Bewegung im Bereich der Wasserentnahmestelle zu erfassen und bei Erfassung einer solchen Bewegung die Anwesenheit einer Person im Bereich der Wasserentnahmestelle an die Steuerungseinrichtung zu signalisieren.

5. Gebäudewassersicherheitseinrichtung nach einem der vorhergehenden Ansprüche,
**dadurch gekennzeichnet, dass** die Sensoreinrichtung ausgebildet ist, um eine lokale Temperaturveränderung im Bereich der Wasserentnahmestelle zu erfassen und bei Erfassung einer solchen lokalen Temperaturveränderung die Anwesenheit einer Person im Bereich der Wasserentnahmestelle an die Steuerungseinrichtung zu signalisieren.

6. Gebäudewassersicherheitseinrichtung nach einem der vorhergehenden Ansprüche,
**dadurch gekennzeichnet, dass** die Sensoreinrichtung
- aktiv durch Aussenden und Empfangen von elektromagnetischen Wellen,
- aktiv durch Aussenden und Empfangen von Ultraschallwellen, oder
- passiv durch Empfangen einer Infrarotstrahlung,
- oder einer Kombination aus von zwei der oder allen drei vorgenannten Funktionsweisen arbeitet.

7. Gebäudewassersicherheitseinrichtung nach einem der vorhergehenden Ansprüche,
**dadurch gekennzeichnet, dass** die Sensoreinrichtung und oder die Aktuatoreinheit mit der Steuerungseinrichtung drahtlos kommuniziert.

8. Gebäudewassersicherheitseinrichtung nach einem der vorhergehenden Ansprüche,
**dadurch gekennzeichnet, dass** die Sensoreinrichtung und/oder die Aktuatoreinheit einen Energiespeicher aufweist, vorzugsweise einen wiederaufladbaren oder austauschbaren Energiespeicher.

9. Gebäudewassersicherheitseinrichtung nach einem der vorhergehenden Ansprüche,
**dadurch gekennzeichnet, dass** das Absperrventil in die Zentralwasserzuleitung eines Gebäudes eingebaut ist und jeweils eine Sensoreinrichtung in jedem Bereich einer oder mehrerer Wasserentnahmestelle(n) des Gebäudes bereitgestellt ist.

10. Gebäudewassersicherheitseinrichtung nach einem der vorhergehenden Ansprüche,
**dadurch gekennzeichnet, dass** die Steuerungseinrichtung Teil einer Gebäudesteueruhg ist und vorzugsweise über ein Drahtlosnetzwerk innerhalb des Gebäudes mit der/den Sensoreinrichtungen und/oder dem Aktuator kommuniziert.

11. Gebäudewassersicherheitseinrichtung nach einem der vorhergehenden Ansprüche,
**gekennzeichnet durch** eine Durchflussmesseinrichtung oder eine Druckmesseinrichtung zum Erfassen eines Durchflusses bzw. Druckes in einer Zentralwasserleitung, und **dadurch** gekennzeichnet, dass die Steuerungseinrichtung ausgebildet ist, um zu einem vorbestimmten Zeitpunkt oder innerhalb eines vorbestimmten Zeitraumes, wenn keine Person im Bereich einer Wasserentnahmestelle erfasst ist und ggfs. kein wasserverbrauchendes Gerät aktiviert ist, eine Wasserleitungsnetzprüfung auszuführen, umfassend die Schritte:
- Öffnen des Absperrventils mittels des Aktuators, und Erfassen des Durchflusses mittels der Durchflussmesseinrichtung oder
- Erfassen des Druckverlaufs bei geschlossenem Absperrventil über einen vorbestimmten Zeitraum mittels der Druckmesseinrichtung,
- Anzeigen einer Wasserleckage falls ein Durchfluss oder ein Druckabfall erfasst wird, und
- ggfs. Schließen des Absperrventils mittels des Aktuators.

12. Verfahren zur Verhinderung von Wasserschäden in Gebäuden, mit den Schritten
- Absperren einer Zentralwasserleitung mittels eines aktuatorbetätigten Absperrventils (12).
- Erfassen von Personen im Bereich einer Wasserentnahmestelle im Gebäude mittels einer Sensoreinrichtung, insbesondere einem Bewegungsmelder (21, 41, 71)
- Ansteuern des Aktuators (12a) des Absperrventils (12) zum Öffnen des Absperrventils, wenn eine Person im Bereich einer Wasserentnahmestelle im Gebäude erfasst wird, **gekennzeichnet durch** die Schritte:
a) Erfassen des Schaltzustandes oder eines Schaltvorgangs eines elektromagnetischen Peripherieabsperrventils eines wasserverbrauchenden Geräts,
und
b) Ansteuern des Aktuators (12a) des Absperrventils (12) in Abhängigkeit des Schaltzustandes bzw. Schaltvorgangs des Peripherieabsperrventils.

13. Verfahren nach Anspruch 12,
**dadurch gekennzeichnet, dass** der Schaltzustand oder Schaltvorgang mittels
- Direktem Auslesen eines Ansteuersignals des Peripherieabsperrventils
- Induktiver Abtastung durch eine im Bereich des Peripherieabsperrventils angeordnete Spule oder einen im Bereich des Peripherieabsperrventils angeordneten Magnetfeldsensor, oder Akustischer Abtastung eines Schaltgeräuschs des Peripherieabsperrventils erfasst wird.

14. Verfahren nach Anspruch 12 oder 13, mit den Schritten
- Erfassen einer Einschaltbetätigung an einem wasserverbrauchenden Gerät,
- Ansteuern des Aktuators des Absperrventils zum Öffnen des Absperrventils, wenn eine Einschaltbetätigung ertasst wird.

15. Verfahren nach Anspruch 12, 13 oder 14, mit den Schritten
- Drahtloses Übermitteln eines Signals von der Sensoreinrichtung und/oder dem wasserverbrauchenden Gerät zu einer Steuerungseinrichtung, und/oder
- Drahtloses Übermitteln eines Signals von der Steuerungseinrichtung zu dem Aktuator des Absperrventils.

16. Verfahren nach einem der Ansprüche 12 bis 15, mit den Schritten
- zu einer vorbestimmten Überprüfungszeit in regelmäßigen Zeitintervallen oder bei Betätigen einer Überprüfungsschalters:
∘ Öffnen des Absperrventils mittels des Aktuators, und
∘ Erfassen des Durchflusses mittels einer Durchflussmesseinrichtung,
oder
∘ Erfassen eines Druckverlaufs über einen vorbestimmten Zeitraum mittels einer Druckmesseinrichtung bei geschlossenem Absperrventil in Strömungsrichtung hinter dem Absperrventil,
und
- Schließen des Absperrventils mittels des Aktuators und Anzeigen einer Wasserleckage falls ein Durchfluss oder ein Druckabfall festgestellt wird.

## Claims

1. Building water safety system, comprising
- a shut-off valve (12) with an inlet opening and an outlet opening, a valve passage which connects the inlet opening to the outlet opening and a shut-off member which opens the valve passage for the medium to flow from the inlet opening to the outlet opening when in an open position and closes it when in a closed position,
- an actuator (12a), in particular an electro-mechanically operated actuator, which is mechanically coupled with the shut-off member and which is configured to move the shut-off member out of the open position into the closed position and vice versa,
- a sensor device for detecting the presence of a person in the area of a water drawing point,
- a control system (13) coupled by signal communication with the sensor device and the actuator, which is configured to
o activate the actuator in order to move the shut-off member into the open position on receiving a sensor signal from the sensor device signalling the presence of a person in the area of the water drawing point and/or
o activate the actuator in order to move the shut-off member into the closed position on receiving a sensor signal from the sensor device signalling the absence of a person in the area of the water drawing point,
- a switch device (72, 73) which is coupled with the control system (13) by signal communication and which is configured to detect a switch-on operation of a water-consuming device and send a signal to the control system in order to open the shut-off valve,
**characterised in that** the switch device comprises a sensor which is configured to detect the switching status or a switching operation of an electromagnetic peripheral shut-off valve to which the water-consuming device is connected,
and the switch-on operation is detected on the basis of an opening operation of the peripheral shut-off valve.

2. Building water safety system as claimed in claim 1, **characterised in that** the switching status or switching operation is detected due to the fact that the sensor
- comprises an electric coil or an electronic magnetic field sensor which is configured to detect a magnetic field of the electromagnet of the peripheral shut-off valve, or
- comprises a microphone in order to detect a switching noise or a flow noise of the peripheral shut-off valve.

3. Building water safety system as claimed in claim 1 or 2,
**characterised in that** the control system is configured to activate the actuator in order to move the shut-off member into the closed position on expiry of a predefined period of time after receiving a sensor signal from the sensor device signalling the presence of a person in the area of the water drawing point.

4. Building water safety system as claimed in one of the preceding claims,
**characterised in that** the sensor device is configured to detect a movement in the area of the water drawing point and on detecting such a movement to signal the presence of a person in the area of the water drawing point to the control system.

5. Building water safety system as claimed in one of the preceding claims,
**characterised in that** the sensor device is configured to detect a local temperature change in the area of the water drawing point and on detecting such a local temperature change to signal the presence of a person in the area of the water drawing point to the control system.

6. Building water safety system as claimed in one of the preceding claims,
**characterised in that** the sensor device operates
- actively by transmitting and receiving electromagnetic waves,
- actively by transmitting and receiving ultrasonic waves, or
- passively by receiving infrared radiation,
- or by a combination of two or all three of the aforementioned operating modes.

7. Building water safety system as claimed in one of the preceding claims,
**characterised in that** the sensor device and/or the actuator unit communicates wirelessly with the control system.

8. Building water safety system as claimed in one of the preceding claims,
**characterised in that** the sensor device and/or the actuator unit has an energy storage, preferably a rechargeable or replaceable energy storage.

9. Building water safety system as claimed in one of the preceding claims,
**characterised in that** the shut-off valve is integrated in the central water supply line of a building and a sensor device is provided respectively in every area of a or of a plurality of water drawing point(s) of the building.

10. Building water safety system as claimed in one of the preceding claims,
**characterised in that** the control system is part of a building control system and preferably communicates with the sensor devices (s) and/or the actuator across a wireless network within the building.

11. Building water safety system as claimed in one of the preceding claims,
**characterised by** a flow measuring device or a pressure measuring device for detecting a flow or pressure in a central water supply line and **characterised in that** the control system is configured to run a test on the water supply network if no person is detected in the area of a water drawing point at a predefined time or within a predefined period of time and optionally if no water-consuming device is activated, comprising the steps:
- opening the shut-off valve by means of the actuator and detecting the flow by means of the flow measuring device or
- detecting the pressure characteristic when the shut-off valve is closed over a predefined period of time by means of the pressure measuring device,
- indicating a water leak if a flow or a pressure drop is detected, and
- if necessary, closing the shut-off valve by means of the actuator.

12. Method of preventing water damage in buildings, comprising the steps
- shutting off a central water supply line by means of an actuator-operated shut-off valve (12),
- detecting persons in the area of a water drawing point in the building by means of a sensor device, in particular a motion sensor (21, 41, 71),
- activating the actuator (12a) of the shut-off valve (12) in order to open the shut-off valve if a person is detected in the area of a water drawing point in the building, **characterised by** the steps:
a) detecting the switching status or a switching operation of an electromagnetic peripheral shut-off valve of a water-consuming device,
and
b) activating the actuator (12a) of the shut-off valve (12) depending on the switching status or switching operation of the peripheral shut-off valve.

13. Method as claimed in claim 12,
**characterised in that** the switching status or switching operation is detected by means of
- a direct reading of a control signal of the peripheral shut-off valve,
- inductive scanning by means of a coil disposed in the region of the peripheral shut-off valve or a magnetic field sensor disposed in the region of the peripheral shut-off valve, or
- acoustic scanning of a switching noise of the peripheral shut-off valve.

14. Method as claimed in claim 12 or 13, comprising the steps
- detecting a switch-on operation at a water-consuming device,
- activating the actuator of the shut-off valve in order to open the shut-off valve if a switch-on operation is detected.

15. Method as claimed in claim 12, 13 or 14, comprising the steps
- wirelessly transmitting a signal from the sensor device and/or from the water-consuming device to a control system, and/or
- wirelessly transmitting a signal from the control system to the actuator of the shut-off valve.

16. Method as claimed in one of claims 12 to 15, comprising the steps
- at a predefined testing time at regular time intervals or when a test switch is operated:
∘ opening the shut-off valve by means of the actuator, and
∘ detecting the flow by means of a flow measuring device,
or
∘ detecting a pressure characteristic for a predefined period of time by means of a pressure measuring device when the shut-off valve is closed, downstream of the shut-off valve in the flow direction,
and
- closing the shut-off valve by means of the actuator and indicating a water leak if a flow or a pressure drop is detected.

## Revendications

1. Dispositif de sécurité de l'eau pour des bâtiments, comprenant :
- une valve d'arrêt (12) avec une ouverture d'entrée et une ouverture de sortie, un canal de valve qui relie l'ouverture d'entrée à l'ouverture de sortie et un organe d'arrêt qui libère le canal de valve dans une position ouverte pour le passage d'un fluide de l'ouverture d'entrée à l'ouverture de sortie et le bloque dans une position de fermeture,
- un actionneur (12a), en particulier un actionneur actionné par voie électromécanique qui est mécaniquement couplé avec l'organe d'arrêt et est réalisé pour le déplacement de l'organe d'arrêt de la position ouverte à la position fermée et inversement,
- un dispositif de détection pour la détection de la présence d'une personne dans la zone d'un point de prélèvement d'eau,
- un dispositif de commande (13) couplé en signal avec le dispositif de détection et l'actionneur, qui est réalisé afin de
-- commander, lors de la réception d'un signal de détection par le dispositif de détection qui signale la présence d'une personne dans la zone du point de prélèvement d'eau, l'actionneur pour le déplacement de l'organe d'arrêt dans la position ouverte et/ou
-- commander, lors de la réception d'un signal de détection par le dispositif de détection qui signale l'absence d'une personne dans la zone du point de prélèvement d'eau, l'actionneur pour le déplacement de l'organe d'arrêt dans la position fermée,
- un dispositif de commutation (72, 73) qui est couplé en signal avec le dispositif de commande (13) et est réalisé afin de détecter un actionnement d'allumage d'un appareil de consommation d'eau et de transmettre un signal au dispositif de commande pour l'ouverture de la valve d'arrêt,
**caractérisé en ce que** le dispositif de commutation comporte un capteur qui est réalisé afin de détecter l'état de commutation ou un processus de commutation d'une valve d'arrêt de périphérie électromagnétique, à laquelle l'appareil de consommation d'eau est raccordé,
et **en ce que** l'actionnement d'allumage est détecté à l'aide d'un processus d'ouverture de la valve d'arrêt de périphérie.

2. Dispositif de sécurité de l'eau pour des bâtiments selon la revendication 1, **caractérisé en ce que** l'état de commutation ou le processus de commutation détecte que le capteur
- comporte une bobine électrique ou un capteur de champ magnétique électronique qui est réalisé(e) afin de détecter un champ magnétique de l'électroaimant de la valve d'arrêt de périphérie ou
- comporte un microphone afin de détecter un bruit de commutation ou un bruit de débit de la valve d'arrêt de périphérie.

3. Dispositif de sécurité de l'eau pour des bâtiments selon la revendication 1 ou 2, **caractérisé en ce que** le dispositif de commande est réalisé afin de commander, après l'expiration d'un intervalle prédéterminé après la réception d'un signal de détection par le dispositif de détection qui signale la présence d'une personne dans la zone du point de prélèvement d'eau, l'actionneur pour le déplacement de l'organe d'arrêt dans la position de fermeture.

4. Dispositif de sécurité de l'eau pour des bâtiments selon l'une quelconque des revendications précédentes,
**caractérisé en ce que** le dispositif de détection est réalisé afin de détecter un déplacement dans la zone du point de prélèvement d'eau et de signaler lors de la détection d'un tel déplacement la présence d'une personne dans la zone du point de prélèvement d'eau au dispositif de commande.

5. Dispositif de sécurité de l'eau pour des bâtiments selon l'une quelconque des revendications précédentes,
**caractérisé en ce que** le dispositif de détection est réalisé afin de détecter une modification de température locale dans la zone du point de prélèvement d'eau et de signaler lors de la détection d'une telle modification de température locale la présence d'une personne dans la zone du point de prélèvement d'eau au dispositif de commande.

6. Dispositif de sécurité de l'eau pour des bâtiments selon l'une quelconque des revendications précédentes,
**caractérisé en ce que** le dispositif de détection travaille
- activement par émission et réception d'ondes électromagnétiques,
- activement par émission et réception d'ondes ultrasonores ou
- passivement par réception d'un rayonnement infrarouge,
- ou en combinaison de deux ou de l'ensemble des trois modes de fonctionnement précités.

7. Dispositif de sécurité de l'eau pour des bâtiments selon l'une quelconque des revendications précédentes,
**caractérisé en ce que** le dispositif de détection ou l'unité d'actionnement communique sans fil avec le dispositif de commande.

8. Dispositif de sécurité de l'eau pour des bâtiments selon l'une quelconque des revendications précédentes,
**caractérisé en ce que** le dispositif de détection et/ou l'unité d'actionnement présente un accumulateur d'énergie, de préférence un accumulateur d'énergie rechargeable ou interchangeable.

9. Dispositif de sécurité de l'eau pour des bâtiments selon l'une quelconque des revendications précédentes,
**caractérisé en ce que** la valve d'arrêt est intégrée dans la conduite d'amenée d'eau centrale d'un bâtiment et respectivement un dispositif de détection est mis à disposition dans chaque zone d'un ou plusieurs point(s) de prélèvement d'eau du bâtiment.

10. Dispositif de sécurité de l'eau pour des bâtiments selon l'une quelconque des revendications précédentes,
**caractérisé en ce que** le dispositif de commande fait partie d'une commande de bâtiment et communique de préférence par un réseau sans fil dans le bâtiment avec le/les dispositifs de détection et/ou l'actionneur.

11. Dispositif de sécurité de l'eau pour des bâtiments selon l'une quelconque des revendications précédentes,
**caractérisé par** un dispositif de mesure de débit ou un dispositif de mesure de pression pour la détection d'un débit ou d'une pression dans une conduite d'amenée d'eau centrale, en ce que le dispositif de commande est réalisé afin de réaliser à un moment prédéterminé ou dans une période prédéterminée lorsqu'aucune personne n'est détectée dans la zone d'un point de prélèvement d'eau et éventuellement aucun appareil de consommation d'eau n'est activé, une vérification de réseau de conduite d'eau, comprenant les étapes de :
- l'ouverture de la valve d'arrêt à l'aide de l'actionneur, et la détection du débit à l'aide du dispositif de mesure de débit ou
- la détection de la courbe de pression en cas de valve d'arrêt fermée sur une période prédéterminée à l'aide du dispositif de mesure de pression,
- l'indication d'une fuite d'eau si un débit ou une chute de pression est détecté et
- éventuellement la fermeture de la valve d'arrêt à l'aide de l'actionneur.

12. Procédé pour empêcher des dommages dus à l'eau dans des bâtiments, avec les étapes de :
- l'arrêt d'une conduite d'amenée d'eau centrale à l'aide d'une valve d'arrêt (12) actionnée par l'actionneur,
- la détection de personnes dans la zone d'un point de prélèvement d'eau dans le bâtiment à l'aide d'un dispositif de détection, en particulier d'un détecteur de mouvement (21, 41, 71),
- la commande de l'actionneur (12a) de la valve d'arrêt (12) pour l'ouverture de la valve d'arrêt lorsqu'une personne est détectée dans la zone d'un point de prélèvement d'eau dans le bâtiment, **caractérisé par** les étapes de :
a) la détection de l'état de commutation ou d'un processus de commutation d'une valve d'arrêt de périphérie électromagnétique d'un appareil de consommation d'eau, et
b) la commande de l'actionneur (12a) de la valve d'arrêt (12) en fonction de l'état de commutation ou du processus de commutation de la valve d'arrêt de périphérie.

13. Procédé selon la revendication 12,
**caractérisé en ce que** l'état de commutation ou le processus de commutation est détecté à l'aide
- la lecture directe d'un signal de commande de la valve d'arrêt de périphérie
- le balayage inductif par une bobine agencée dans la zone de la valve d'arrêt de périphérie ou un capteur de champ magnétique agencé dans la zone de la valve d'arrêt de périphérie ou
- le balayage acoustique d'un bruit de commutation de la valve d'arrêt de périphérie.

14. Procédé selon la revendication 12 ou 13, avec les étapes de
- la détection d'un actionnement d'allumage sur un appareil de consommation d'eau,
- la commande de l'actionneur de la valve d'arrêt pour l'ouverture de la valve d'arrêt lorsqu'un actionnement d'allumage est détecté.

15. Procédé selon la revendication 12, 13 ou 14, avec les étapes de
- la transmission sans fil d'un signal du dispositif de détection et/ou de l'appareil de consommation d'eau à un dispositif de commande et/ou
- la transmission sans fil d'un signal du dispositif de commande à l'actionneur de la valve d'arrêt.

16. Procédé selon l'une quelconque des revendications 12 à 15, avec les étapes de
- pour un temps de vérification prédéterminé à intervalles réguliers ou lors de l'actionnement d'un commutateur de vérification :
-- l'ouverture de la valve d'arrêt à l'aide de l'actionneur et
-- la détection du débit à l'aide d'un dispositif de mesurer de débit
ou
-- la détection d'une courbe de pression sur une période prédéterminée à l'aide d'un dispositif de mesure de pression en cas de valve d'arrêt fermée dans le sens d'écoulement derrière la valve d'arrêt,
et
- la fermeture de la valve d'arrêt à l'aide de l'actionneur et l'indication d'une fuite d'eau si un débit ou une chute de pression est constaté.
